# EUROPEAN PATENT SPECIFICATION

(11) **EP 1 998 473 B1**
(45) Date of publication and mention of the grant of the patent: **22.04.2015**
(21) Application number: 07714614.0
(22) Date of filing: 20.02.2007
(51) Int. Cl.: H04L 29/08

(54) **INFORMATION SYNCHRONIZATION SYSTEM**
INFORMATIONSSYNCHRONISATIONSSYSTEM
SYSTEME DE SYNCHRONISATION D'INFORMATIONS

(30) Priority: 20.02.2006 JP 2006042629
(43) Date of publication of application: 03.12.2008
(73) Proprietor: Kabushiki Kaisha Kobe Seiko Sho (Kobe Steel, Ltd.), Kobe-shi, Hyogo 651-8585 (JP)
(72) Inventor: IKEDA, Hideo, Hyogo 651-2271 (JP); KUSAKA, Takuya, Hyogo 651-2271 (JP); TAMURA, Naoki, Hyogo 651-2271 (JP); MANABE, Chitaka, Hyogo 651-2271 (JP); SAKAI, Hidenori, Hyogo 675-0137 (JP); IWASA, Yuichi, Hyogo 675-0137 (JP)
(74) Representative: Müller-Boré & Partner Patentanwälte PartG mbB
(86) International application number: PCT/JP2007/053114
(87) International publication number: WO 2007/097348

(56) References cited:
- WO-A1-01/55931
- JP-A- 2003 212 349
- JP-A- 2005 223 822
- US-A1- 2005 030 160

## Description

### Technical Field

The present invention relates to a synchronizing system in which, in a case where a first information storage device having a short-distance wireless communication function is provided on a carrier that moves, synchronization can be achieved flexibly even for information that is to be written to the first information storage device particularly at a distant place where communication by the first information storage device is not allowed.

### Background Art

RFID (radio frequency identification) is expected to serve as technologies for improving the efficiency of production and distribution.

Generally, when data is written to an RFID tag, in many cases, the writing of information to the RFID tag is not the end of all processing. Usually, the data written to the RFID tag is updated for the purpose of product management or process management.

For example, when a process such as processing of a product is managed, an RFID tag is attached to an object that is processed, and the process of processing is managed using information regarding the object that is processed (lot information, information regarding the type of processing, information regarding the material, information regarding the delivery date, and so forth), stored in the RFID tag.

In this case, the RFID tag attached to the object that is processed, entering the process of processing, has written thereon initial information regarding the object that is processed, such as a lot number, a delivery date, a current stage of processing, and so forth, and the information must be updated each time the object is processed. The updated information at the time of completion of the process of processing is read from the RFID tag as final product information, and is sent to a server for management and is maintained in a predetermined state of management.

US 2005/0030160 A1 discloses asset tags for use in a WLAN/RFID system. The asset tag comprises a processor, an RFID antenna coupled to the processor and configured to receive interrogations from an RFID reader and send replies to the RFID reader; and a wireless transceiver coupled to the processor. The wireless transceiver configured to receive information from and send information to a wireless access port of a wireless local area network.

### Disclosure of Invention

### Problems to be Solved by the Invention

In order to update the information of the RFID tag in a plurality of processes, such as the process of processing described above, each time the information is updated, it is necessary to write information or read information from the RFID tag using an RFID-tag read/write device (hereinafter simply referred to as a read/write device). In such a system, however, expensive read/write devices must be provided for all the processes, which inevitably incurs high according to the techniques described above, the worker who operates the read/write device that performs communication with the RFID tag must move around in accordance with movement of the object being processed. This causes an infinitely large burden on the worker.

Furthermore, as an application of the techniques described above, it is conceivable to install the read/write device with the wireless LAN function on a carrying device (carrier) so that information of the RFID tag attached to a managed object on the carrying device can be transmitted to a remote location through communication via the wireless LAN.

However, since read/write devices are expensive, it is not practical to install read/write devices on all carrying devices.

Accordingly, the present invention has been made in view of the situation described above, and it is an object thereof to provide at a low price a practical information synchronizing system with which information stored in a storage device such as an RFID tag attached to a carrier that moves can be synchronized accurately with, for example, information on the side of a managing device.

### Means for Solving the Problems

In order to achieve the above object, according to the present invention, there is provided an information synchronizing system including a carrier including a first information storage device having a first wireless communication range and a first wireless communication terminal including a second information storage device having a second wireless communication range, the second wireless communication range being larger than the first wireless communication range; a read/write device that reads information from and writes information to the first information storage device; a wireless communication base station capable of performing wireless communication with the first wireless communication terminal; and a synchronization controlling device that synchronizes information stored in the first information storage device and information stored in the second information storage device, wherein the synchronization controlling device writes the information stored in the first information storage device, the information being read using the read/write device, to the second information storage device via the wireless communication base station and the first wireless communication terminal, and wherein the synchronization controlling device writes the information stored in the second information storage device, the information being read via the first wireless communication terminal and the wireless communication base station, to the first information storage device using the read/write device.

The synchronization controlling device may read the information stored in the first information storage device using the read/write device upon the read/write device entering the first wireless communication range.

After the synchronization controlling device reads the information stored in the first information storage device using the read/write device, the synchronization controlling device may write the information that has been read to the second information storage device via the wireless communication base station and the first wireless communication terminal.

The synchronization controlling device may read in advance the information stored in the second information storage device via the wireless communication base station and the first wireless communication terminal, and the synchronization controlling device may write the information that has been read to the first information storage device using the read/write device upon the read/write device entering the first wireless communication range.

The information synchronizing system may further include a further carrier having a second wireless communication terminal, the first wireless communication terminal and the second wireless communication terminal may exist in a communication range of the wireless base station, and the wireless base station may perform communication only with the first wireless communication terminal.

The intensity of a wireless signal of the first wireless communication terminal may be greater than a predetermined intensity or the intensity of a wireless signal of the second wireless communication terminal.

Communication with the wireless communication base station may become possible earlier for the first wireless communication terminal than for the second wireless communication terminal.

The first wireless communication terminal may have first unique information matching unique information of the first information storage device, the second wireless communication terminal may have second unique information different from the first unique information, and the wireless communication base station may read the first unique information of the first wireless communication terminal and the second unique information of the second wireless communication terminal.

The information synchronizing system may further include a further carrier having a second wireless communication terminal, and a communication range of the wireless communication base station may be set to be a range where wireless communication is allowed only with the first wireless communication terminal.

The wireless communication base station may perform communication with the first wireless communication terminal via a wireless antenna having such a communication distance that only one carrier is possible to enter within the communication distance.

The first wireless communication terminal may be provided on a movable carrier.

The read/write device, the wireless communication base station, and the synchronization controlling device may be provided in a synchronizing device that moves relative to the carrier.

The wireless communication base station and the synchronization controlling device may be provided in a synchronizing device that moves relative to the carrier, and the read/write device may be provided on a portable device that can be carried separately from the synchronizing device.

The information synchronizing system may further include a read/write-device moving device that moves the read/write device with the synchronizing device for a predetermined distance together with the carrier.

The information synchronizing system may further include a read/write-device moving device that moves the read/write device for a predetermined distance together with the carrier.

The information synchronizing device may further include a device that determines, in a case where the information in the first information storage device and the information in the second information storage device are to be synchronized, whether synchronization is to be achieved by using the information in the first information storage device or by using the information in the second information storage device according to a position where the synchronizing device is provided.

The information synchronizing system may further include a device that determines, on the basis of time of communication regarding information to be synchronized maintained in the first information storage device and the first wireless communication terminal, which information is to be used for synchronization.

The device may cause synchronization to be performed on the basis of information with latest communication time.

The synchronizing device may be connected to an information management device, and the synchronizing device may transfer at least part of the information stored in the first information storage device to the information management device so that the transferred information is maintained therein.

The synchronizing device may be connected to an information management device, and the synchronizing device may transfer at least part of the information stored in the second information storage device to the information management device so that the transferred information is maintained therein.

The synchronizing device may be connected to an information management device, and the synchronizing device may transfer at least part of the information stored in the first information storage device and at least part of the information stored in the second information storage device to the information management device so that the transferred information is maintained therein.

The synchronizing device may be connected to an information management device, and it may be possible to arbitrarily select information to be synchronized and information to be transferred to and maintained in a database of the information management device among the information stored in the first information storage device.

The synchronizing device may be connected to an information management device, and it may be possible to arbitrarily select information to be synchronized and information to be transferred to and maintained in a database of the information management device among the information stored in the second information storage device.

The synchronizing device may be connected to an information management device, and it may be possible to arbitrarily select information to be synchronized and information to be transferred to and maintained in a database of the information management device among the information stored in the first information storage device and the information stored in the second information storage device.

The information synchronizing system may further include a device that writes information stored in a database of a management device connected to the synchronizing device to at least one of the first information storage device and the second information storage device.

### Advantages

As described above, according to the present invention, a short-distance communication device capable of performing communication only at a short distance, implemented by a combination of a first storage device and a read/write device, and a long-distance communication device supporting a longer communication distance, implemented by a combination of a wireless communication terminal and a wireless communication base station, are both provided. Thus, communication is performed by the short-distance communication device only when the first storage device (i.e., a carrier) comes to a predetermined short distance from the read/write device, while only information stored in the second information storage device is updated by the long-distance communication device when the carrier exists at a long distance.

When it has become possible for the carrier to perform communication using the short-distance communication device, communication using both communication devices becomes possible, so that an attempt is made to achieve synchronization between content stored in the first storage device and content stored in the second storage device instantaneously at that time.

With this configuration, without the need for costly devices, such as expensive read/write devices provided on individual carriers, updating of stored content at an arbitrary place is allowed, so that it is possible to implement an extremely practical information synchronizing system.

### Brief Description of Drawings

Fig. 1 is schematic diagram showing a scheme of a managed object with an RFID tag according to an embodiment of the present invention.
Fig. 2 is a schematic diagram for showing an information synchronizing system according to the embodiment of the present invention.
Fig. 3 is a schematic diagram showing an example of application of an information synchronizing system according to the embodiment of the present invention.
Fig. 4 is a schematic diagram of a loading area that can be used in the system shown in Fig. 3.
Fig. 5 is a schematic diagram of a shipping area that can be used in the system shown in Fig. 3.

### Reference Numerals

- 1: carrier
- 2: managed object
- 3: RFID tag
- 4: wireless communication terminal
- 5: data storage device
- 6: synchronizing device
- 7: wireless communication base station
- 8: PDA (portable wireless communication terminal)
- 9: LAN wireless communication base station
- 11: RFID tag antenna

### Best Mode for Carrying Out the Invention

Now, an embodiment of the present invention will be described with reference to the accompanying drawings to aid understanding of the present invention. The embodiment described below is only an exemplary embodiment of the present invention, and is not intended to limit the technical scope of the present invention.

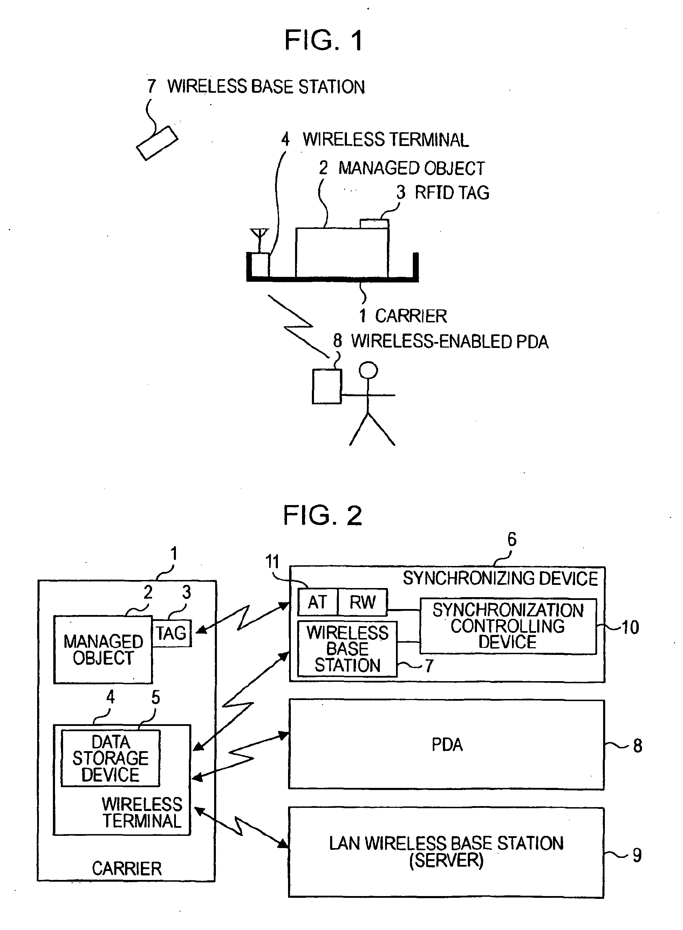

First, an overall configuration of this embodiment will be described using a schematic diagram shown in Fig. 2.

A carrier 1, such as a crane or a carrier truck, moves with a managed object 2 carried thereon, such as an object that is processed.

The managed object 2 has provided thereon an RFID tag 3.

On the carrier 1, in addition to the managed object 2, a wireless communication terminal 4 is provided. The wireless communication terminal 4 has a wireless communication function supporting a longer distance than that of the RFID tag 3. Furthermore, the wireless communication terminal 4 has or is connected to a data storage device 5 that is separate from the RFID tag 3.

The wireless communication terminal 4 of the carrier 1 configured as described above is capable of performing long-distance wireless communication from the RFID tag 3 with, for example, a wireless base station 7 provided in a synchronizing device 6, a PDA 8 having a wireless function, or a LAN wireless communication base station 9 that performs communication via a wireless LAN, which are separate from the carrier 1.

Among the synchronizing device 6, the PDA 8, and the LAN wireless communication base station 9, the synchronizing device 6 has a special configuration.

More specifically, the synchronizing device 6, the PDA 8, and the LAN wireless communication base station 9 perform wireless communication at relatively long distances with the wireless communication terminal 4. The synchronizing device 6 performs long-distance wireless communication with the wireless communication terminal 4 via the wireless communication base station 7 thereof. Furthermore, in addition to having functions for performing wireless communication via the wireless communication base station 7 at relatively long distances similarly to the PDA 8 and the LAN wireless communication base station 9, the synchronizing device 6 has a read/write device RW, and by using it, has a function of performing short-distance wireless communication with the RFID tag 3 attached to the managed object 2 on the carrier 1. Furthermore, in addition to the read/write device RW and the wireless communication base station 7, the synchronizing device 6 includes a synchronization controlling device 10 that controls the read/write device RW and the wireless communication base station 7 and that has a storage function.

Thus, when the carrier 1 comes into a range where communication with the read/write device RW of the RFID tag 3 is allowed, the RFID tag 3 and the read/write device RW perform communication so that information stored in the RFID tag 3 is transmitted to the wireless communication base station 7 via the synchronization controlling device 10. Furthermore, this information is stored in the data storage device 5 connected to the wireless communication terminal 4 through communication between the wireless communication base station 7 and the wireless communication terminal 4 on the carrier 1.

Furthermore, since the communication range of the wireless communication terminal 4 is large, the information stored in the data storage device 5 can be updated at an arbitrary timing by the wireless communication terminal 4 performing communication with the PDA 8, the LAN wireless communication base station 9, or the wireless communication base station 7 of the synchronizing device 6.

Furthermore, upon the carrier 1 moving into the vicinity of the synchronizing device 6 again, through communication between the read/write device RW and the RFID tag 3, the information written to the data storage device 5 is written to the RFID tag 3 via the data storage device 5 → the wireless communication base station 7 → the synchronization controlling device 10 → the read/write device RW.

Thus, the information read from the RFID tag 3 is first written to the data storage device 5 of the wireless communication terminal 4. Then, even when the carrier 1 is in a place distant from the synchronizing device 6, the information written to the data storage device 5 is updated. Finally, the updated data is written to the RFID tag 3 again, whereby synchronization is achieved between the information stored in the RFID tag 3 and the information in the data storage device 5 of the wireless communication terminal 4.

Although the wireless communication base station, the synchronization controlling device, and the read/write device RW are provided in a synchronizing device that moves relative to the carrier as described above, the read/write device RW may be provided on a portable device that can be carried, further provided separately from the synchronizing device. This is because, in many cases, operation is facilitated if an operator can carry the small read/write device RW alone.

Next, the embodiment will be described in more detail.

The carrier 1, which is a component of this system, carries thereon the managed object 2, the RFID tag 3 attached to the managed object 2, the wireless communication terminal 4, and the data storage device 5 connected to the wireless communication terminal 4 (refer to Figs. 1 and 2).

The RFID tag 3 is a storage device with which certain information can be read, written, and saved from outside via wireless signals and that has a communication range of a relatively short distance, such as the UHF band, and application thereof to management of production and distribution is expected.

The carrier 1 is a carrying device for carrying the managed object 2. It may be of the type that hangs the managed object 2, such as a crane, or of the type that carries the managed object 2 on a tray. It also may be of the type that is not segmented for each managed object 2, such as a belt conveyor. In this case, individual segments where the managed objects 2 are managed should be considered as independent and separate portions.

As described earlier, the carrier 1 includes the wireless communication terminal 4. This is a terminal having a long-distance wireless communication function with a communication range larger than that of the RFID tag 3, and having a CPU, a memory, and so forth. Similarly to the RFID tag 3, it can read, write, and save certain information from outside via wireless signals. Furthermore, the wireless communication terminal 4 can perform communication at a longer distance than the RFID tag 3 or while moving at a rapid speed, via a wireless LAN conforming to the IEEE 802.11 standard or the like. Instead of the IEEE 802.11 standard, the wireless standard used for communication by the wireless communication terminal 4 may be a standard included in the IEEE 802.15 standard, such as the BlueTooth standard or the ZigBee standard, and a standard suitable for an intended application in view of communication distance, noise endurance, or other factors should be selected.

The wireless communication terminal 4 has a long-distance wireless communication range as described above. Thus, the wireless communication terminal 4 included in the carrier 1 is accessed via the long-distance wireless by the wireless-enabled PDA 8 carried by a worker, the LAN wireless communication base station 9 connected to a server on a network, the synchronizing device described earlier, and so forth. It is possible to write information of the managed object 2 to the RFID tag 3, read information of the managed object 2 maintained by the wireless communication terminal 4, or add new information that occurs in the course of production or distribution.

Although such a configuration is possible where a wireless apparatus such as the external synchronization device 6 or PDA 8 and the wireless communication terminal 4 included in the carrier 1 perform communication directly, such a configuration is also possible where the wireless communication base station 7 is provided in the middle and communication is performed via the wireless communication base station 7. Now, a case where the wireless communication base station 7 is used will be described.

In order to achieve synchronization between information maintained in the RFID tag 3 attached to the managed object 2 and information maintained in the wireless communication terminal 4 (stored in the data storage device 5), in this system, the synchronizing device 6 is introduced (refer to Fig. 2).

This includes the read/write device RW having an RFID antenna 11 for accessing the RFID tag 3, the wireless communication base station 7 for accessing the wireless communication terminal 4 on the carrier 1, and the synchronization controlling device 10 that performs a synchronizing process via these devices.

The synchronization controlling device 10 performs communication with the RFID tag 3 and the wireless communication terminal 4 individually, and performs a synchronizing process so that information maintained by these devices becomes the same. A specific method of the synchronizing process will be described later again.

By providing the synchronizing device 6 at a certain place within a range where electromagnetic waves of the RFID tag 3 reach and performing the synchronizing process, the range of use where it is difficult to use the RFID tag 3 can be increased drastically, such as a case where the carrier 1 is in a range where communication with the RFID tag 3 is not allowed or the speed of movement of the carrier 1 is so fast that communication between the RFID tag 3 and the read/write device RW is not allowed. As an example of specific implementation, the synchronizing process is performed to move information of the RFID tag 3 to the wireless communication terminal 4, then the information is updated by accessing the information stored on the wireless communication terminal 4, and the updated information is finally returned to the RFID tag 3 through the inverse path of the path of the information.

More specifically, for example, the synchronizing process is performed at a timing described below.

When the carrier 1 has entered the vicinity of the synchronizing device 6 and the RFID tag 3 on the carrier 1 has responded to the read/write device RW, the read/write device RW reads the information maintained in the RFID tag 3, and sends the information to the synchronization controlling device 10. Upon receiving the information of the RFID tag 3, the synchronization controlling device 10 checks a response from the wireless communication terminal 4 on the carrier 1, and if a response is received, writes received information to the data storage device 5 of the wireless communication terminal 4.

Alternatively, as described earlier, when the read/write device RW has entered the communication range of the RFID tag 3, the synchronization controlling device 10 reads the information stored in the data storage device 5 of the wireless communication terminal 4 via the wireless communication base station 7, and writes the information to the RFID tag 3 via the read/write device RW.

Accordingly, under the intervention of the synchronization controlling device 10, information is transferred from the RFID tag 3 to the data storage device 5 or from the data storage device 5 to the RFID tag 3 so that mutual synchronization of the content stored in these devices is achieved.

In this case, the synchronization controlling device 10 may read information from the second information storage device 5 via the wireless communication base station 7 and the wireless communication terminal 4 in advance and store the information, and further the read/write device RW may write the information to the RFID tag 3 when the read/write device RW has entered the communication range of the RFID tag 3.

When the synchronizing device 6 has entered the communication range of the RFID tag 3 having a short communication distance and the information maintained therein has been read successfully, the synchronizing device 6 starts the synchronizing process.

Although the antenna 11 of the read/write device RW may be fixed on the read/write device RW, there can be cases where it is portable and a worker manually moves the antenna to perform communication with the RFID tag 3. The read/write device RW itself may also be portable.

In this case, first, when the carrier 1 has entered the communication range of the RFID tag 3 in the vicinity of the synchronizing device 6, a worker or the like manually places the antenna 11 against the RFID tag 3, and the read/write device RW reads information maintained by the RFID tag 3 and sends the information to the synchronization controlling device 10. Upon receiving the information of the RFID tag 3, the synchronization controlling device 10 checks a response from the wireless communication terminal 4 on the carrier 1 via the wireless communication base station 7, and if a response is received, reads the information maintained in the wireless communication terminal 4.

Furthermore, there are cases where synchronization must be achieved while the carrier is moving at a considerable speed. In this case, if the relative speed between the first information storage device (the RFID tag 3) and the read/write device is large, it could become impossible to perform updating between the first information storage device and the read/write device. Thus, by providing a read/write-device moving device that moves the first information storage device and the read/write device together with the synchronizing device 6 or alone for a predetermined distance together with the carrier 1, with the read/write-device moving device, the relative speed becomes 0 or extremely small, so that problems such as the updating failure described above are avoided. A conceivable example is an antenna moving device that is provided near a conveyor and that moves a predetermined distance reciprocally together with managed objects mounted on the conveyor.

Upon obtaining information maintained in both devices, the synchronization controlling device 10 performs the synchronizing process. Information of which device is maintained will be described later.

For example, in a case where a wireless LAN conforming to IEEE 802.11 is used, the communication range of the wireless communication terminal 4 is as large as several hundred meters. Thus, there is a possibility that a plurality of wireless communication terminals 4 exists in the communication range so that it is not possible to identify the wireless communication terminal 4 performing communication with the RFID tag 3 on the carrier 1.

The following is a conceivable method of identifying the wireless communication terminal 4.

First, the communication area of the wireless communication base station 7 is restricted to only a needed area, and a situation is mode where there exists only one wireless communication terminal 4 therein, so that the wireless communication terminal 4 is identified.

For example, when carriers 1 (wireless communication terminals 4) are disposed and carried on a conveyor at regular intervals, it is conceivable to restrict the communication range of the wireless communication terminal 4 to a communication range narrower than the distance between the carriers 1. Alternatively, it is possible to restrict the direction of transmission of wireless signals to only a needed area using a directional antenna.

Even if the communication area of the wireless communication base station 7 is restricted as described above, it is possible that a plurality of wireless communication terminals 4 enters the communication range.

In this case, first, the intensities of wireless signals used for communication between the wireless communication base station 7 and the wireless communication terminal 4 are compared, and the wireless communication terminal 4 with the stronger intensity is identified.

Furthermore, at production and logistic sites, routes of movement of carriers 1 are restricted to a certain extent. Thus, depending on factors such as the antenna directivity of the wireless communication base station 7, it is possible to predict in advance a point where the intensity of wireless signals becomes most intense on the route. Therefore, by designing the antenna directivity of the wireless communication base station 7 so that the intensity of wireless signals for communication between the wireless communication base station 7 and the wireless communication terminal 4 becomes most intense at a point of reading signals of the RFID tag 3, such as the center point of the loop antenna of the read/write device RW, it becomes possible to identify the wireless communication terminal 4.

However, in the case of a configuration where the RFID tag 3 is read while moving the read/write device RW of the synchronizing device 6, in some cases, it is not possible to fix a point of reading signals of the RFID tag 3.

In that case, a conceivable method is to identify wireless communication terminals 4 in order of their entry into the communication area. That is, a carrier that enters the communication range earliest is identified as a counterparty of communication.

As described above, at production and distribution sites, since the route of movement of carriers 1 is restricted to some extent, by determining a communication range, it is possible to recognize the order of entry of the carrier 1 into the communication range.

Thus, in the case of this method, for example, assuming that a worker moves the antenna of the read/write device RW to read information of the RFID tag 3, information of the RFID tag 3 can be read by placing the read/write device RW against it in order of entry of carriers 1 into the work area.

By providing a display lamp or the like on the carrier 1 so that the worker is notified of selection upon selection of the wireless communication terminal 4 by the synchronization controlling device 10, the processing is further facilitated.

In some RFID tags, unique ID numbers for identifying the tags are embedded. In the case where the unique ID number having the RFID tag 3 is not included in information that is to be synchronized, it is necessary to perform the synchronizing process in a certain way and to write the unique ID number to the data storage device 5 of the wireless communication terminal 4. In this case, the subsequent synchronizing process is performed as follows. When the worker has moved the antenna of the read/write device RW to read the RFID tag 3 on a certain carrier 1, the synchronization controlling device 10 first reads unique ID number information from all the communication terminals existing in the communication range, and selects one matching that of the RFID tag 3 as a synchronization target.

In this way, regardless of the order of entry of carriers 1 into the communication range, the worker can perform the synchronizing process by reading an RFID tag 3 from an arbitrary carrier 1 existing in the communication range.

As specifics of the synchronization process, first, a conceivable method is to determine whether to use content maintained at the RFID tag 3 or content maintained at the wireless communication terminal 4 according to the position where the synchronizing device 6 is installed.

More specifically, at a certain synchronizing device 6, the content maintained at the RFID tag 3 is used as being correct, and the content is copied directly to the wireless communication terminal 4. Furthermore, at another synchronizing device 6, the content maintained at the wireless communication terminal 4 is used as being correct, and the content is copied directly to the RFID tag 3.

According to this method, for example, at a synchronizing device 6 installed at a place of the beginning of a segment where the wireless communication terminal 4 is used, the content maintained at the RFID tag 3 at that time is used ass being correct and is copied to the wireless communication terminal 4. At a synchronizing device 6 installed at a place of the end of the segment where the wireless communication terminal 4 is used, the content maintained at the wireless communication terminal 4 at that time is used as being correct and is copied to the RFID tag 3. Accordingly, change made to the wireless communication terminal 4 in the segment where the wireless communication terminal 4 can be written back to the RFID tag 3.

Furthermore, if an extra amount of information can be saved, a conceivable method is to include a timestamp in information maintained at the RFID tag 3 and/or the wireless communication terminal 4.

In this case, each time information is updated, the time information is recorded as a timestamp. When the synchronizing process is performed, the stamp of information maintained at the RFID tag 3 and the stamp of information maintained at the wireless communication terminal 4 are compared, and the newer updating time is considered as being correct, and based on this time, older information is overwritten with newer information.

It is effective for product management to connect the synchronizing device 6 to a server apparatus and to save information possessed by the RFID tag 3 or the wireless communication terminal 4 in the server apparatus (the LAN wireless communication base station 9 or the like) on a network each time the synchronizing process is performed.

In this case, preferably, it is allowed to arbitrarily select information that is to be synchronized and information that is to be transferred to and maintained in a database on the server apparatus (the LAN wireless communication base station 9 or the like) among information stored in the RFID tag 3 or the data storage device 5.

Furthermore, although the maximum amount information that can be maintained on the RFID tag 3 is limited to about several hundred bytes, it is readily possible to configure the wireless communication terminal 4 so that information of approximately several hundred Mbytes can be stored, so that it is possible to maintain much more information.

Thus, in a conceivable method of use, in a segment where information is maintained at the wireless communication terminal 4, regardless of the information capacity of the RFID tag 3, related data of a large volume, such as image data and audio data, is maintained as needed, and when the synchronizing process is executed, such large-volume information is saved only in a database on a server such as the LAN wireless communication base station 9 connected to the synchronizing device 6 and only a portion of the information is maintained in synchronization on the RFID tag 3.

Accordingly, it is possible to search the server later for related information on the basis of information such as the unique ID number of the RFID tag 3. This is effective for product management.

Conversely, when the synchronizing process is performed from the RFID tag 3 to the wireless communication terminal 4, it is possible to search for related large-volume information saved in a database on a server on the basis of information such as the unique ID number of the RFID tag 3, write the information to the wireless communication terminal 4, and use the information for subsequent processing.

By causing the synchronizing device 6 to write information stored in a database on a server such as the LAN wireless communication base station 9, which is another information management apparatus, on the RFID tag 3 or the data storage device 5, it becomes possible for the RFID tag 3 to obtain arbitrary information. This improves the value of the system drastically.

An example of application of a system according to the present invention to a product carriage system, a process carriage system, or the like will be described below.

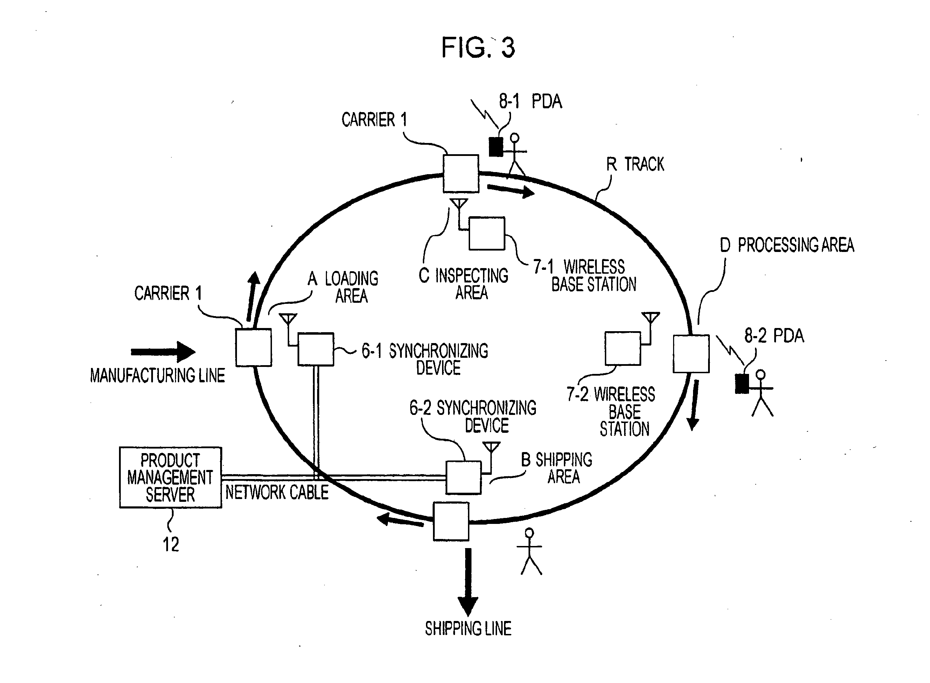

First, an overview of this system will be described with reference to Fig. 3.

This system is a system in which a plurality of carriers 1 are moved on a predetermined track R, products are received from the production line in a loading area A, and the products are passed to a shipping line in a shipping area B.

On the movement path on the track, an inspecting area C and a processing area D exist. In the individual areas, a worker performs inspection of products and performs processing for shipping in accordance with inspection results.

The carrier 1 is configured as shown in Fig. 1, and includes the managed object 2 and the wireless communication terminal 4 conforming to, for example, the IEEE 802.11g standard. The wireless communication terminal 4 is configured to perform communication with the synchronization controlling device 10 in the synchronizing device 6 via the wireless communication base station 7. Furthermore, the wireless communication terminal 4 is configured to be capable of performing communication with the wireless-enabled PDA 8 owned by a worker, or with the LAN wireless communication base station 9.

In the "loading area A" and the "shipping area B", synchronizing devices 6-1 and 6-2 are installed, which perform synchronizing processes between wireless communication terminals on carriers 1 and RFID tags 3 attached to products. The synchronizing devices 6 are connected via a network cable or the like to a product management server 12 that manages product information. The basic configuration of the synchronizing device 6 is shown in Fig. 2, which will be described later in detail.

Furthermore, in the "inspecting area C" and the "processing area D", wireless communication base stations 7-1 and 7-2 are provided, which intermediate communication between wireless communication terminals 4 on carriers 1 and the wireless-enabled PDA 8.

Now, an overview of the operation of the system according to this embodiment will be described in order.

Upon a carrier 1 reaching the "loading area A", a product (managed object 2) with an RFID tag 3 attached thereto is mounted on the carrier 1 from the manufacturing line. In the "loading area A", the synchronizing device 6-1 is installed so that information on the RFID tag 3 and information on the wireless communication terminal 4 are synchronized.

At this time, since no information regarding the product is attached to the wireless communication terminal 4, basically, the information on the RFID tag 3 is transferred and written to the wireless communication terminal 4. As a method for this operation, synchronization may be achieved by mechanically using a synchronization method of "using the information on the RFID tag 3 as being correct and writing the information on the wireless communication terminal 4" in the "loading area A". Alternatively, synchronization may be achieved by providing information with a timestamp in the RFID tag 3, checking whether newer information corresponding to the information maintained on the RFID tag 3 exists on the wireless communication terminal 4, and "using the information on the RFID tag 3 as being correct and writing the information to the wireless communication terminal 4" since such information is absent on the wireless communication terminal 4 as a result.

At this time, since the synchronizing device 6-1 in the "loading area A" is connected to the product management server 12, using the unique ID number of the RFID tag 3 as a keyword, additional information relating to the product and not written on the RFID tag 3 may be downloaded from the product management server 12 and written to the wireless communication terminal 4.

When the product has been mounted and information regarding the product has been written to the data storage device 5 on the wireless communication terminal 4 through the synchronizing process, the carrier 1 moves along the track R and reaches the "inspecting area C".

In the "inspecting area C", a worker having a wireless-enabled PDA 8-1 accesses the wireless communication terminal 4 on the carrier 1 via the wireless communication base station 7-1, performs inspection on the basis of product information maintained on the wireless communication terminal 4, and writes the result of inspection to the wireless communication terminal 4 using the wireless-enabled PDA 8-1. At this time, since the communication range of the wireless communication terminal 4 is large, the worker can perform writing to the wireless communication terminal 4 even at a distance where reading from or writing to the RFID tag 3 is usually not possible. Furthermore, although it is usually necessary for reading from or writing to the RFID tag 3 that the speed of movement of the carrier 1 be as low as approximately 1 km/h, in the case of the wireless communication terminal 4, reading or writing is allowed even during movement at a faster speed.

After passing through the "inspecting area C", the carrier 1 then reaches the "processing area D". In the "processing area D", a worker having a wireless-enabled PDA 8-2 accesses the wireless communication terminal 4 on the carrier 1 via the wireless communication base station 7-2, performs processing on the product on the basis of product information maintained on the wireless communication terminal 4 or inspection information attached in the "inspecting area C", and writes the result of processing to the wireless communication terminal 4. Alternatively, instead of simply writing the result, a picture or movie of the product may be captured and the captured data may be written to the wireless communication terminal 4 via the wireless communication base station 7-1. Similarly to the "inspecting area", there exists some flexibility regarding the distance for writing to the carrier 1 or the communication rate for writing to the carrier 1.

Finally, the carrier 1 reaches the "shipping area B", and when the carrier 1 passes through the synchronizing device 6-2 installed therein, information attached to the wireless communication terminal 4 (the data storage device 5) or changed information is transferred and written to the RFID tag 3. Regarding this decision, synchronization may be achieved by mechanically "using the information on the wireless communication terminal 4 as being correct and writing the information to the RFID tag 3" as a method of synchronization in the "shipping area D", or synchronization may be achieved by providing information with a timestamp in the RFID tag 3 and the wireless communication terminal 4, comparing timestamps of information maintained on these devices, and overwriting older information with newer information.

At this time, the synchronizing device 6-2 in the "shipping area" is connected to the product management server 12, and information possessed on the wireless communication terminal 4 is recorded in a product information database of the production management server 12.

If the wireless communication terminal 4 has information exceeding the storage capacity of the RFID tag 3, such as captured data of a picture or a movie, such information is not transferred to the RFID tag 3 and is only recorded in the product information database. This makes it possible to perform searching later on the basis of the unique ID number of the RFID tag 3.

Even in a case where the RFID tag 3 must be detached from the product in the course of the process, by detaching the RFID tag 3 after performing the synchronizing process in the "loading area A" and attaching a new RFID tag 3 before performing the synchronizing process in the "shipping area D", the RFID system functions continuously without any problem.

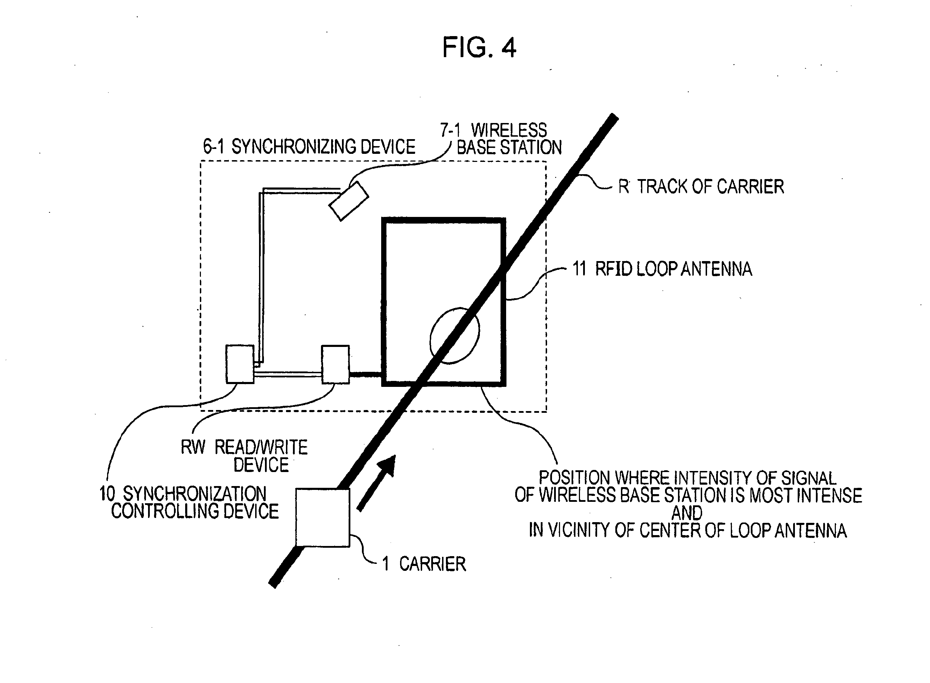

Next, of the two synchronizing devices 6-1 and 6-2 in Fig. 3, the operation of the synchronizing device 6-1 will be described in detail with reference to Fig. 4.

In the synchronizing device 6-1, an RFID antenna 11 is provided so as to form a loop shape surrounding a track, and a carrier 1 passes through the center point of the loop of the antenna 11. Furthermore, the wireless communication base station 7 is configured so that, with its directive antenna, communication is allowed only in the vicinity of the loop of the RFID antenna 11 and the signal intensity becomes most intense in the proximity of the loop.

In a case where the carrier 1 moves on the track R and a synchronizing process is performed in an area of the synchronizing device 6, the RFID tag 3, the synchronization controlling device 10, and the wireless communication terminal 4 executes the following procedure.

First, for the purpose of reading of the RFID tag 3 by the read/write device RW-1, the carrier 1 reduces the speed of movement to approximately 1 km/h and enters the area. Since the speed is restricted only in the proximity of the read/write device RW, this control can be readily achieved.

When the carrier 1 passes through the loop of the RFID antenna 11, information on the RFID tag 3 attached to the managed object 2 on the carrier 1 is read by the read/write device RW of the synchronizing device 6, and is read into the synchronization controlling device 10.

In response to the event as a trigger, information maintained in the data storage device 5 of the wireless communication terminal 4 is also read into the synchronization controlling device 10 via the wireless communication base station 7. In the case where a plurality of wireless communication terminals 4 that can perform communication with the wireless communication base station 7 exists, information of a wireless communication terminal 4 selected according to a priority of a factor such as an electric wave intensity or the like described earlier is read.

In this way, information on the wireless communication terminal 4 included in the carrier 1 and information on the RFID tag 3 attached to the managed object 2 carried by the carrier 1 are read into the synchronization controlling device 10. Then, these items of information under go a synchronization process according to the predetermined procedure described above, and then written respectively to the RFID tag 3 and the data storage device 5 of the wireless communication terminal 4, whereby rewriting is achieved.

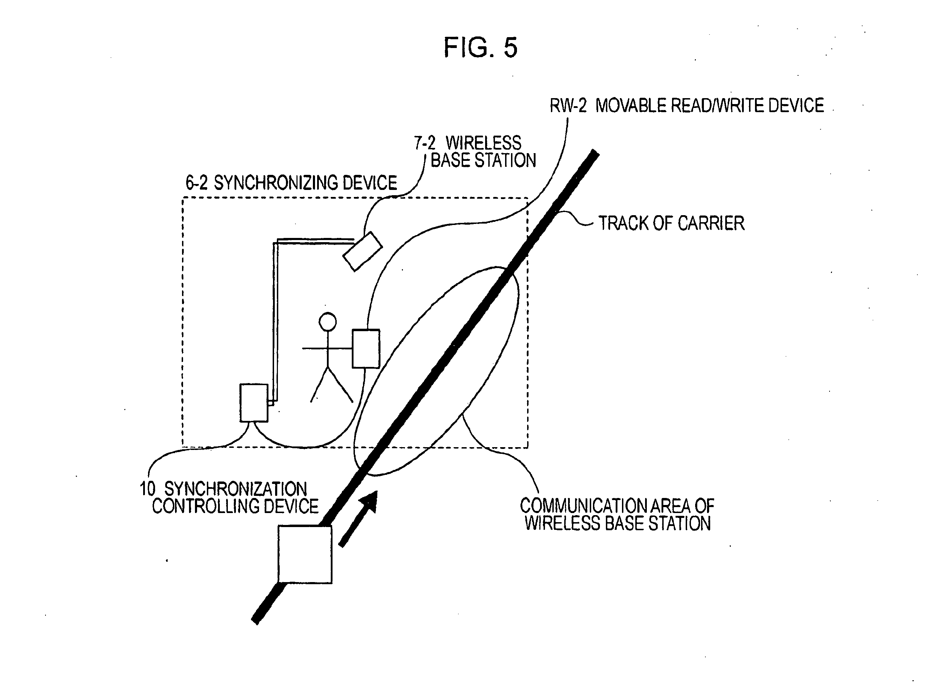

Furthermore, the operation of the synchronizing device 6-2 will be described in detail using a specific example shown in Fig. 5.

The synchronizing device 6-2 is connected to a movable read/write device RW-2, and a worker places the read/write device RW-2 against the RFID tag 3 attached to the managed object 2 carried by the carrier 1, whereby synchronization is achieved. Furthermore, since the wireless intensity of the wireless communication base station 7 of the synchronizing device 6-2 is strong, the wireless communication base station 7 can uniformly cover a predetermined area having a certain size, and can communication with an object moving a considerable speed, so that communication can be performed similarly with a plurality of wireless communication terminals 4 within this area. Furthermore, in this area, even when the carrier 1 enters the area at a speed substantially the same as a normal speed (e.g., 10 km/h), communication with the wireless communication terminal 4 is allowed.

Upon entry of the carrier 1 into the area, the synchronization controlling device 10 saves the identification number of the wireless communication terminal 4, such as an IP address, in a list in a memory in the order of entry.

Then, a worker places the movable the read/write device RW-1 against the RFID tag 3 to read information on the RFID tag 3, the synchronization controlling device 10 performs the synchronizing process with an oldest terminal in the list saved in the memory, and then deletes information of the wireless communication terminal 4 on the memory. That is, in the list of the synchronization controlling device 10, a wireless communication terminal whose entry time is next oldest becomes a next subject of synchronization.

Alternatively, the following method may be used.

In a case where the unique ID number of the RFID tag 3 is included in information to be synchronized maintained in the wireless communication terminal 4, upon reading of information of the RFID tag 3 by the worker, unique ID numbers are read from all the wireless communication terminals in the area, a wireless communication terminal 4 having a unique ID number matching that on the RFID tag 3 is selected, and the synchronizing process is performed with the wireless communication terminal 4.

According to the system described above, it is possible to communicate even with a remote object, for which it is difficult to use the RFID tag 3, so that it is possible to implement a more convenient production management system using a combination with a wireless system such as a wireless LAN.

### Industrial Applicability

The present invention can be used for product carriage systems or process carriage systems.

## Claims

1. An information synchronizing system comprising:
a carrier (1) including a first information storage device (3) having a first wireless communication range and a first wireless communication terminal (4) including a second information storage device (5) having a second wireless communication range, the second wireless communication range being larger than the first wireless communication range;
a read/ write device (RW) that reads information from and writes information to the first information storage device (3);
a wireless communication base station (7) capable of performing wireless communication with the first wireless communication terminal (4); and
a synchronization controlling device (10) that synchronizes information stored in the first information storage device (3) and information stored in the second information storage device (5),
wherein the synchronization controlling device (10) writes the information stored in the first information storage device (3), the information being read using the read/ write device (RW), to the second information storage device (5) via the wireless communication base station (7) and the first wireless communication terminal (4), and
wherein the synchronization controlling device (10) writes the information stored in the second information storage device (5), the information being read via the first wireless communication terminal (4) and the wireless communication base station (7), to the first information storage device (3) using the read/ write device (RW).

2. The information synchronizing system according to Claim 1,
wherein the synchronization controlling device (10) reads the information stored in the first information storage device (3) using the read/ write device (RW) upon the read/ write device (RW) entering the first wireless communication range.

3. The information synchronizing system according to Claim 2,
wherein, after the synchronization controlling device (10) reads the information stored in the first information storage device (3) using the read/ write device (RW), the synchronization controlling device (10) writes the information that has been read to the second information storage device (5) via the wireless communication base station (7) and the first wireless communication terminal (4).

4. The information synchronizing system according to Claim 1,
wherein the synchronization controlling device (10) reads in advance the information stored in the second information storage device (5) via the wireless communication base station (7) and the first wireless communication terminal (4), and wherein the synchronization controlling device (10) writes the information that has been read to the first information storage device (3) using the read/ write device (RW) upon the read/ write device (RW) entering the first wireless communication range.

5. The information synchronizing system according to Claims 1 to 4, further comprising:
a further carrier having a second wireless communication terminal,
wherein the first wireless communication terminal (4) and the second wireless communication terminal exist in a communication range of the wireless communication base station (7), and
wherein the wireless communication base station (7) performs communication only with the first wireless communication terminal (4).

6. The information synchronizing system according to Claim 5,
wherein communication with the wireless communication base station (7) becomes possible earlier for the first wireless communication terminal (4) than for the second wireless communication terminal; and/ or
wherein the first wireless communication terminal (4) has first unique information matching unique information of the first information storage device (3), wherein the second wireless communication terminal has second unique information different from the first unique information, and
wherein the wireless communication base station (7) reads the first unique information of the first wireless communication terminal (4) and the second unique information of the second wireless communication terminal.

7. The information synchronizing system according to Claim 1, further comprising:
a further carrier having a second wireless communication terminal,
wherein a communication range of the wireless communication base station (7) is set to be a range where wireless communication is allowed only with the first wireless communication terminal (4).

8. The information synchronizing system according to Claim 1,
wherein the wireless communication base station (7) performs communication with the first wireless communication terminal via a wireless antenna (11) having such a communication distance that only one carrier (1) is possible to enter within the communication distance.

9. The information synchronizing system according to any one of the preceding Claims,
wherein the read/ write device (RW), the wireless communication base station (7), and the synchronization controlling device (10) are provided in a synchronizing device (6) that moves relative to the carrier (1); and/ or
wherein the wireless communication base station (7) and the synchronization controlling device (10) are provided in a synchronizing device (6) that moves relative to the carrier (1), and wherein the read/ write device (RW) is provided on a portable device that can be carried separately from the synchronizing device (6).

10. The information synchronizing system according to any one of Claims 1 to 8, further comprising:
a read/ write device moving device that moves the read/ write device (RW) with or without the synchronizing device (6) for a predetermined distance together with the carrier (1).

11. The information synchronizing device according to Claim 1, further comprising:
a device that determines, in a case where the information in the first information storage device (3) and the information in the second information storage device (5) are to be synchronized, whether synchronization is to be achieved by using the information in the first information storage device (3) or by using the information in the second information storage device (5) according to a position where the synchronizing device (6) is provided.

12. The information synchronizing system according to Claim 1, further comprising:
a device that determines, on the basis of time of communication regarding information to be synchronized maintained in the first information storage device (3) and the first wireless communication terminal (4), which information is to be used for synchronization.

13. The information synchronizing system according to Claim 11 or 12,
wherein the device causes synchronization to be performed on the basis of information with latest communication time.

14. The information synchronizing system according to Claim 1,
wherein the synchronizing device (6) is connected to an information management device, and
wherein the synchronizing device (6) transfers at least part of the information stored in the first information storage device (3) to the information management device so that the transferred information is maintained therein; and/or
wherein the synchronizing device (6) transfers at least part of the information stored in the second information storage device (5) to the information management device so that the transferred information is maintained therein.

15. The information synchronizing system according to Claim 1,
wherein the synchronizing device (6) is connected to an information management device, and it is possible to arbitrarily select information to be synchronized and information to be transferred to and maintained in a database of the information management device among the information stored in the first information storage device (3) and/or
the information stored in the second information storage device (5).

16. The information synchronizing system according to Claim 1, further comprising:
a device that writes information stored in a database of a management device connected to the synchronizing device (6) to at least one of the first information storage device (3) and the second information storage device (5).

## Patentansprüche

1. Informationssynchronisationssystem, das umfasst:
einen Träger (1), der eine erste Informationsspeichervorrichtung (3) mit einem ersten drahtlosen Kommunikationsbereich und ein erstes drahtloses Kommunikationsendgerät (4) mit einer zweiten Informationsspeichervorrichtung (5) mit einem zweiten drahtlosen Kommunikationsbereich umfasst, wobei der zweite drahtlose Kommunikationsbereich größer als der erste drahtlose Kommunikationsbereich ist;
eine Lese-/Schreibvorrichtung (RW), die Informationen von der ersten Informationsspeichervorrichtung (3) liest und in sie schreibt;
eine drahtlose Kommunikationsbasisstation (7), die fähig ist, die drahtlose Kommunikation mit dem ersten drahtlosen Kommunikationsendgerät (4) durchzuführen; und
eine Synchronisationssteuervorrichtung (10), die Informationen, die in der ersten Informationsspeichervorrichtung (3) gespeichert sind, und Informationen, die in der zweiten Informationsspeichervorrichtung (5) gespeichert sind, synchronisiert,
wobei die Synchronisationssteuervorrichtung (10) die in der ersten Informationsspeichervorrichtung (3) gespeicherten Informationen, während die Informationen unter Verwendung der Lese-/Schreibvorrichtung (RW) gelesen werden, über die drahtlose Kommunikationsbasisstation (7) und das erste drahtlose Kommunikationsendgerät (4) in die zweite Informationsspeichervorrichtung (5) schreibt, und
wobei die Synchronisationssteuervorrichtung (10) die in der zweiten Informationsspeichervorrichtung (5) gespeicherten Informationen, während die Informationen über das erste drahtlose Kommunikationsendgerät (4) und die drahtlose Kommunikationsbasisstation (7) gelesen werden, unter Verwendung der Lese-/Schreibvorrichtung (RW) in die erste Informationsspeichervorrichtung (5) schreibt.

2. Informationssynchronisationssystem nach Anspruch 1,
wobei die Synchronisationssteuervorrichtung (10) die in der ersten Informationsspeichervorrichtung (3) gespeicherten Informationen, nachdem die Lese-/Schreibvorrichtung (RW) den ersten drahtlosen Kommunikationsbereich einspeist, unter Verwendung der Lese-/Schreibvorrichtung (RW) liest.

3. Informationssynchronisationssystem nach Anspruch 2,
wobei, nachdem die Synchronisationssteuervorrichtung (10) die in der ersten Informationsspeichervorrichtung (3) gespeicherten Informationen unter Verwendung der Lese-/Schreibvorrichtung (RW) liest, die Synchronisationssteuervorrichtung (10) gelesene Informationen über die drahtlose Kommunikationsbasisstation (7) und das erste drahtlose Kommunikationsendgerät (4) in die zweite Informationsspeichervorrichtung (5) schreibt.

4. Informationssynchronisationssystem nach Anspruch 1,
wobei die Synchronisationssteuervorrichtung (10) die in der zweiten Informationsspeichervorrichtung (5) gespeicherten Informationen über die drahtlose Kommunikationsbasisstation (7) und das erste drahtlose Kommunikationsendgerät (4) im Voraus liest, und wobei die Synchronisationssteuervorrichtung (10) die gelesenen Informationen unter Verwendung der Lese-/Schreibvorrichtung (RW) in die erste Informationsspeichervorrichtung (3) speichert, nachdem die Lese-/Schreibvorrichtung (RW) den ersten drahtlosen Kommunikationsbereich eingespeist hat.

5. Informationssynchronisationssystem nach einem der Ansprüche 1 bis 4, das ferner umfasst:
einen weiteren Träger mit einem zweiten drahtlosen Kommunikationsendgerät,
wobei das erste drahtlose Kommunikationsendgerät (4) und das zweite drahtlose Kommunikationsendgerät in einem Kommunikationsbereich der drahtlosen Kommunikationsbasisstation (7) vorhanden sind, und
wobei die drahtlose Kommunikationsbasisstation (7) die Kommunikation nur mit dem ersten drahtlosen Kommunikationsendgerät (4) durchführt.

6. lnformationssynchronisationssystem nach Anspruch 5,
wobei die Kommunikation mit der drahtlosen Kommunikationsbasisstation (7) für das erste drahtlose Kommunikationsendgerät (4) früher möglich wird als für das zweite drahtlose Kommunikationsendgerät; und/oder
wobei das erste drahtlose Kommunikationsendgerät (4) erste eindeutige Informationen hat, die mit eindeutigen Informationen der ersten Informationsspeichervorrichtung (3) übereinstimmen, wobei das zweite drahtlose Kommunikationsendgerät zweite eindeutige Informationen hat, die sich von den ersten eindeutigen Informationen unterscheiden, und
wobei die drahtlose Kommunikationsbasisstation (7) die ersten eindeutigen Informationen des ersten drahtlosen Kommunikationsendgeräts (4) und die zweiten eindeutigen Informationen des zweiten drahtlosen Kommunikationsendgeräts liest.

7. Informationssynchronisationssystem nach Anspruch 1, das ferner umfasst:
einen weiteren Träger mit einem zweiten drahtlosen Kommunikationsendgerät,
wobei ein Kommunikationsbereich der drahtlosen Kommunikationsbasisstation (7) auf einen Bereich festgelegt wird, in dem die drahtlose Kommunikation nur mit dem ersten drahtlosen Kommunikationsendgerät (4) zulässig ist.

8. Informationssynchronisationssystem nach Anspruch 1,
wobei die drahtlose Kommunikationsbasisstation (7) die Kommunikation mit dem ersten drahtlosen Kommunikationsendgerät über eine drahtlose Antenne (11) mit einer derartigen Kommunikationsstrecke durchführt, dass nur ein Träger (1) innerhalb der Kommunikationsstrecke eingesetzt werden kann.

9. lnformationssynchronisationssystem nach einem der vorhergehenden Ansprüche,
wobei die Lese-/Schreibvorrichtung (RW), die drahtlose Kommunikationsbasisstation (7) und die Synchronisationssteuervorrichtung (10) in einer Synchronisationsvorrichtung (6) bereitgestellt sind, die sich relativ zu dem Träger (1) bewegt; und/oder
wobei die drahtlose Kommunikationsbasisstation (7) und die Synchronisationssteuervorrichtung (10) in einer Synchronisationsvorrichtung (6) bereitgestellt sind, die sich relativ zu dem Träger (1) bewegt, und wobei die Lese-/Schreibvorrichtung (RW) auf einer tragbaren Vorrichtung bereitgestellt ist, die getrennt von der Synchronisationsvorrichtung (6) getragen werden kann.

10. Informationssynchronisationssystem nach einem der Ansprüche 1 bis 8, das ferner umfasst:
eine Lese-/Schreibbewegungsvorrichtung, die die Lese-/Schreibvorrichtung (RW) mit oder ohne die Synchronisationsvorrichtung (6) eine vorgegebene Strecke weit zusammen mit dem Träger (1) bewegt.

11. Informationssynchronisationssystem nach Anspruch 1, die ferner umfasst:
eine Vorrichtung, die in einem Fall, in dem die Informationen in der ersten Informationsspeichervorrichtung (3) und die Informationen in der zweiten Informationsspeichervorrichtung (5) synchronisiert werden sollen, gemäß einer Position, wo die Synchronisationsvorrichtung (6) bereitgestellt ist, bestimmt, ob die Synchronisation unter Verwendung der Informationen in der ersten Informationsspeichervorrichtung (3) oder unter Verwendung der Informationen in der zweiten Informationsspeichervorrichtung (5) erreicht werden soll.

12. Informatiönssynchronisationssystem nach Anspruch 1, das ferner umfasst:
eine Vorrichtung, die auf der Basis der Kommunikationszeit in Bezug auf Informationen, die synchronisiert werden sollen, die in der ersten Informationsspeichervorrichtung (3) und dem ersten drahtlosen Kommunikationsendgerät (4) gehalten werden, bestimmt, welche Informationen für die Synchronisation verwendet werden sollen.

13. Informationssynchronisationssystem nach Anspruch 11 oder 12,
wobei die Vorrichtung bewirkt, dass die Synchronisation auf der Basis von Informationen mit der neuesten Kommunikationszeit durchgeführt wird.

14. Informationssynchronisationssystem nach Anspruch 1,
wobei die Synchronisationsvorrichtung (6) mit einer Informationsverwaltungsvorrichtung verbunden ist, und
wobei die Synchronisationsvorrichtung (6) wenigstens einen Teil der in der ersten Informationsspeichervorrichtung (3) gespeicherten Informationen an die Informationsverwaltungsvorrichtung überträgt, so dass die übertragenen Informationen darin gehalten werden; und/oder
wobei die Synchronisationsvorrichtung (6) wenigstens einen Teil der in der zweiten Informationsspeichervorrichtung (5) gespeicherten Informationen an die Informationsverwaltungsvorrichtung überträgt, so dass die übertragenen Informationen darin gehalten werden.

15. Informationssynchronisationssystem nach Anspruch 1,
wobei die Synchronisationsvorrichtung (6) mit einer Informationsverwaltungsvorrichtung verbunden ist und es möglich ist, beliebig Informationen, die synchronisiert werden sollen und Informationen, die in eine Datenbank der Informationsverwaltungsvorrichtung übertragen und dort gehalten werden sollen, aus den in der ersten Informationsspeichervorrichtung (3) gespeicherten Informationen und/oder den in der zweiten Informationsspeichervorrichtung (5) gespeicherten Informationen auszuwählen.

16. Informationssynchronisationssystem nach Anspruch 1, das ferner umfasst:
eine Vorrichtung, die Informationen, die in einer Datenbank einer Verwaltungsvorrichtung, die mit der Synchronisationsvorrichtung (6) verbunden ist, gespeichert sind, in die erste Informationsspeichervorrichtung (3) und/oder die zweite Informationsspeichervorrichtung (5) schreibt.

## Revendications

1. Système de synchronisation d'informations comprenant :
un support (1) incluant un premier dispositif de stockage d'informations (3) ayant une première portée de communication sans fil et un premier terminal de communication sans fil (4) incluant un second dispositif de stockage d'informations (5) ayant une seconde portée de communication sans fil, la seconde portée de communication sans fil étant supérieure à la première portée de communication sans fil ;
un dispositif de lecture/écriture (RW) qui lit des informations provenant de et écrit des informations sur le premier dispositif de stockage d'informations (3) ; une station de base de communication sans fil (7) capable de réaliser une communication sans fil avec le premier terminal de communication sans fil (4) ; et
un dispositif de commande de synchronisation (10) qui synchronise des informations stockées dans le premier dispositif de stockage d'informations (3) et des informations stockées dans le second dispositif de stockage d'informations (5),
dans lequel le dispositif de commande de synchronisation (10) écrit les informations stockées dans le premier dispositif de stockage d'informations (3), les informations étant lues en utilisant le dispositif de lecture/écriture (RW), sur le second dispositif de stockage d'informations (5) par le biais de la station de base de communication sans fil (7) et du premier terminal de communication sans fil (4), et
dans lequel le dispositif de commande de synchronisation (10) écrit les informations stockées dans le second dispositif de stockage d'informations (5), les informations étant lues par le biais du premier terminal de communication sans fil (4) et de la station de base de communication sans fil (7), sur le premier dispositif de stockage d'informations (3) en utilisant le dispositif de lecture/écriture (RW).

2. Système de synchronisation d'informations selon la revendication 1,
dans lequel le dispositif de commande de synchronisation (10) lit les informations stockées dans le premier dispositif de stockage d'informations (3) en utilisant le dispositif de lecture/écriture (RW) suite à l'entrée du dispositif de lecture/écriture (RW) dans la première portée de communication sans fil.

3. Système de synchronisation d'informations selon la revendication 2,
dans lequel, après que le dispositif de commande de synchronisation (10) lit les informations stockées dans le premier dispositif de stockage d'informations (3) en utilisant le dispositif de lecture/écriture (RW), le dispositif de commande de synchronisation (10) écrit les informations qui ont été lues sur le second dispositif de stockage d'informations (5) par le biais de la station de base de communication sans fil (7) et du premier terminal de communication sans fil (4).

4. Système de synchronisation d'informations selon la revendication 1,
dans lequel le dispositif de commande de synchronisation (10) lit en avance les informations stockées dans le second dispositif de stockage d'informations (5) par le biais de la station de base de communication sans fil (7) et du premier terminal de communication sans fil (4), et dans lequel le dispositif de commande de synchronisation (10) écrit les informations qui ont été lues sur le premier dispositif de stockage d'informations (3) en utilisant le dispositif de lecture/écriture (RW) suite à l'entrée du dispositif de lecture/écriture (RW) dans la première portée de communication sans fil.

5. Système de synchronisation d'informations selon les revendications 1 à 4, comprenant en outre :
un autre support ayant un second terminal de communication sans fil,
dans lequel le premier terminal de communication sans fil (4) et le second terminal de communication sans fil existent dans une portée de communication de la station de base de communication sans fil (7), et
dans lequel la station de base de communication sans fil (7) réalise une communication uniquement avec le premier terminal de communication sans fil (4).

6. Système de synchronisation d'informations selon la revendication 5,
dans lequel une communication avec la station de base de communication sans fil (7) devient possible plus tôt pour le premier terminal de communication sans fil (4) que pour le second terminal de communication sans fil ; et/ou dans lequel le premier terminal de communication sans fil (4) a des premières informations uniques correspondant à des informations uniques du premier dispositif de stockage d'informations (3), dans lequel le second terminal de communication sans fil a des secondes informations uniques différentes des premières informations uniques, et
dans lequel la station de base de communication sans fil (7) lit les premières informations uniques du premier terminal de communication sans fil (4) et les secondes informations uniques du second terminal de communication sans fil.

7. Système de synchronisation d'informations selon la revendication 1, comprenant en outre :
un autre support ayant un second terminal de communication sans fil,
dans lequel une portée de communication de la station de base de communication sans fil (7) est définie pour être une portée où une communication sans fil est permise uniquement avec le premier terminal de communication sans fil (4).

8. Système de synchronisation d'informations selon la revendication 1,
dans lequel la station de base de communication sans fil (7) réalise une communication avec le premier terminal de communication sans fil par le biais d'une antenne sans fil (11) ayant une distance de communication telle que seul un support (1) est possible de pénétrer au sein de la distance de communication.

9. Système de synchronisation d'informations selon l'une quelconque des revendications précédentes,
dans lequel le dispositif de lecture/écriture (RW), la station de base de communication sans fil (7) et le dispositif de commande de synchronisation (10) sont prévus dans un dispositif de synchronisation (6) qui se déplace par rapport au support (1) ; et/ou
dans lequel la station de base de communication sans fil (7) et le dispositif de commande de synchronisation (10) sont prévus dans un dispositif de synchronisation (6) qui se déplace par rapport au support (1), et dans lequel le dispositif de lecture/écriture (RW) est prévu sur un dispositif portable qui peut être porté séparément du dispositif de synchronisation (6).

10. Système de synchronisation d'informations selon l'une quelconque des revendications 1 à 8, comprenant en outre :
un dispositif de déplacement de dispositif de lecture/écriture qui déplace le dispositif de lecture/écriture (RW) avec ou sans le dispositif de synchronisation (6) pour une distance prédéterminée avec le support (1).

11. Système de synchronisation d'informations selon la revendication 1, comprenant en outre :
un dispositif qui détermine, dans un cas où les informations dans le premier dispositif de stockage d'informations (3) et les informations dans le second dispositif de stockage d'informations (5) doivent être synchronisées, si une synchronisation doit être réalisée en utilisant les informations dans le premier dispositif de stockage d'informations (3) ou en utilisant les informations dans le second dispositif de stockage d'informations (5) en fonction d'une position où le dispositif de synchronisation (6) est prévu.

12. Système de synchronisation d'informations selon la revendication 1, comprenant en outre :
un dispositif qui détermine, en fonction de l'heure de communication concernant des informations devant être synchronisées maintenues dans le premier dispositif de stockage d'informations (3) et le premier terminal de communication sans fil (4), quelles informations doivent être utilisées pour la synchronisation.

13. Système de synchronisation d'informations selon la revendication 11 ou 12,
dans lequel le dispositif provoque la réalisation d'une synchronisation en fonction des informations avec l'heure de communication la plus récente.

14. Système de synchronisation d'informations selon la revendication 1,
dans lequel le dispositif de synchronisation (6) est connecté à un dispositif de gestion d'informations, et
dans lequel le dispositif de synchronisation (6) transfère au moins une partie des informations stockées dans le premier dispositif de stockage d'informations (3) au dispositif de gestion d'informations de sorte que les informations transférées sont maintenues en son sein ; et/ou
dans lequel le dispositif de synchronisation (6) transfère au moins une partie des informations stockées dans le second dispositif de stockage d'informations (5) au dispositif de gestion d'informations de sorte que les informations transférées sont maintenues en son sein.

15. Système de synchronisation d'informations selon la revendication 1,
dans lequel le dispositif de synchronisation (6) est connecté à un dispositif de gestion d'informations, et il est possible d'arbitrairement sélectionner des informations devant être synchronisées et des informations devant être transférées à et maintenues dans une base de données du dispositif de gestion d'informations parmi les informations stockées dans le premier dispositif de stockage d'informations (3) et/ou
les informations stockées dans le second dispositif de stockage d'informations (5).

16. Système de synchronisation d'informations selon la revendication 1, comprenant en outre :
un dispositif qui écrit des informations stockées dans une base de données d'un dispositif de gestion connecté au dispositif de synchronisation (6) sur au moins un du premier dispositif de stockage d'informations (3) et du second dispositif de stockage d'informations (5).
